# EUROPEAN PATENT APPLICATION

(11) **EP 4 844 248 A1**
(43) Date of publication of application: **25.11.2026**
(21) Application number: 26178408.6
(22) Date of filing: 13.05.2026
(51) Int. Cl.: F16J 15/3232, B21B 31/07, F16J 15/3236, F16J 15/3264

(54) **SEALING ASSEMBLY FOR A BACKUP ROLL WITH OIL-FILM BEARINGS AND ASSOCIATED SEALING RING**

(30) Priority: 19.05.2025 IT 202500011212
(71) Applicant: Tenute S.r.l., 20122 Milano (MI) (IT)
(72) Inventor: Nonino, Gianni, 33100 Udine (IT); Ravanelli, Raffaello, 20875 Burago di Molgora (IT)
(74) Representative: Manfrin, Marta

(57) **Abstract**

A sealing assembly (1) for a backup roll (2) including: a sealing ring (10) with a body (11) made of elastomeric material having an annular portion (12) delimited between a first and a second face (13, 14), opposite to each other, and a first and second lip (15, 16) formed integrally with the annular portion (12), the first lip (15) projecting radially outward and the second lip (16) radially inward, both being axially cantilevered from the second face (14) of the elastomeric body (11) which is oriented, when in use, toward an oil side (4) and provided with an annular rib (18) that projects axially cantilevered from the second face (14) between the first and second lips, each of which includes a sealing surface (21) facing the first face; and an annular element (23) delimiting a channel-shaped seat (24) configured to slidingly engage the sealing ring (10) and, when in use, to rotate together with the backup roll (2).

## Description

### Technical field of the invention

The present invention relates to a sealing assembly for a backup roll configured to make a hydraulic seal, when in use, at a backup roll neck, particularly in a hot or cold rolling mill for flat products. The invention also relates to an associated sealing ring.

### Prior art

US4165881 describes a sealing assembly and an associated flexible seal configured for use in rolling mills for flat products, in which the rolling cylinders or rolls are, as is known, mounted on oil-film bearings to allow them to rotate with low friction. Specifically, the seal in US4165881 is configured to be contact mounted on an end neck of the backup roll, which is a tapered portion of the backup roll that separates the portion of the cylinder intended to cooperate with the products being rolled and is therefore exposed to contaminants such as water and mill scale (water-side cylinder portion), and the support portion of the backup roll, which operates in contact with the lubricating oil (oil-side cylinder portion). When in use, the seal therefore rotates together with the backup roll and has radially outer sealing lips which co-operate slidingly with a stationary annular element attached to a support element for the backup roll.

When the seal is being inserted into its working position on the roll neck, which usually has a truncated-cone or curved shape tapering toward the oil side, the seal may be deformed, which may then compromise its correct positioning and/or the action of the sealing lips when in use, notwithstanding the seal in US4165881 being provided with a cylindrical helical spring to counteract this phenomenon.

A similar problem can also be caused by the axial compression of the seal at the roll neck, which could affect the correct position of the radially outer dynamic sealing (sliding) lips of the seal, which are radially cantilevered from the side opposite the roll neck, on which the seal conversely applies a static seal.

This solution is ultimately complex to install and does not provide a fully efficient hydraulic seal.

These problems are not overcome, except in part, by US409973, which provides for the seal being made from two different elastomeric materials, or by US6729625B2, which describes a seal of the type described above, in which the dynamic sealing lips are partially coated with an anti-friction substance or plate, both solutions also result in higher costs and further complicate manufacture of the seal.

### Summary of the invention

The present invention is intended to provide a sealing assembly for a backup roll configured to make a hydraulic seal, when in use, at a roll neck of a backup roll in a rolling mill, in particular a hot or cold rolling mill for flat products, which is substantially free from the drawbacks described above and in which the roll neck connects an operating portion of the backup roll arranged on a water side and exposed to contaminants such as coolants, mill scale and the like, and a support portion for the backup roll, arranged on an oil side, where the support portion engages an oil-film bearing.

The invention is also intended to provide a sealing ring associated with high sealing efficiency, substantially insensitive to axial offsetting or shifting, and relatively easy to make.

According to the present invention, a sealing assembly is provided for a backup roll, in particular configured to create, when in use, a hydraulic seal at a roll neck of a backup roll in a rolling mill, in particular for flat products, and a related seal, having the features set out in the attached claims.

The novel solution includes a sealing ring that has two integrally formed sealing lips, an outer lip facing the water side on the outer diameter, preferably with a PTFE coating, which is more resistant to water and scale, and the other inner lip which, due to its oil lubrication, as it faces the oil side, is better able to seal the gap between the operating portion of the backup roll, located on the water side, and the support portion of the backup roll, located on the oil side, inserted in a suitable housing, thereby preventing oil leakage.

The sealing solution includes a substantially rigid annular element delimiting an appropriate channel-shaped annular seat, housing the sealing ring and which is carried, when in use, rigidly on a front face of the operating portion of the backup roll, facing the oil side.

The seal can be reinforced internally by steel rings and has a special finger spring co-moulded into the elastomer of the seal and applied to both opposing sealing lips thereof.

### Brief description of the drawings

The invention is described below with reference to the attached drawings, which show a non-limiting example embodiment thereof, in which:
- Figure 1 is a schematic radial sectional view of a circumferential stretch of a sealing assembly according to the invention for a rolling mill of a known type, of which only some components are illustrated schematically, at a roll neck of a backup roll, of which, for simplicity, a radially outer portion is illustrated only schematically;
- Figure 2 is a highly magnified radial sectional view, also only schematic, of a sealing ring according to the invention, as part of the sealing assembly in Figure 1;
- Figure 3 is a magnified schematic radial sectional view of a detail of the sealing assembly in Figure 1;
- Figures 4 and 5 are two schematic opposing perspective views, respectively a rear three-quarter view and a front three-quarter view, on a smaller scale than Figure 2, of the same circumferential stretch of the seal in Figure 2;
- Figure 6 is a schematic rear three-quarter perspective view, on an enlarged scale compared to Figure 4, of a circumferential stretch of a structural assembly of components of the seal in Figure 2; and
- Figure 7 is a schematic rear three-quarter perspective view, on an enlarged scale compared to Figure 6, of a circumferential stretch of one of the components of the structural assembly in Figure 6.

### Detailed description

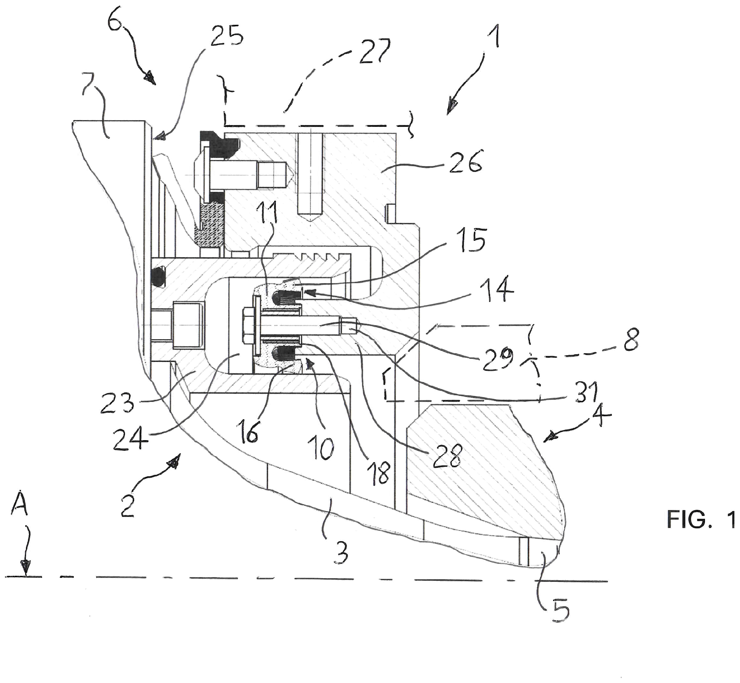

With reference to Figures 1 to 7, reference sign 1 denotes a sealing assembly for a known backup roll 2, said backup roll 2, or simply cylinder 2, is illustrated in Figure 1 only schematically for simplicity and only partially, around one of its roll necks 3. The backup roll 2 is a cylinder operating in a known hot or cold rolling mill for flat products, of which only a few operating parts used therein and located adjacent to the backup roll 2 are illustrated, for simplicity.

When in use, the sealing assembly 1 is configured to make a hydraulic seal at the roll neck 3 of the backup roll 2 but, as set out below, not directly on the roll neck 3, as in the prior art, but radially on the outside of the roll neck 3, specifically between an oil side 4, facing in use toward a known support portion 5, or mating portion 5 with the neck 3, of the backup roll 2, and a water side 6 facing in use toward an operating portion 7 or working surface 7 of the backup roll 2.

The support portion 5 cooperates with the bushing of a known oil-film bearing 8, which is illustrated only in part and only schematically using dashed lines for simplicity, and as such the support portion 5 is a mating portion between the backup roll 2 and the bushing of the bearing 8.

The bearing 8 enables the backup roll 2 to rotate with low friction about an axis A (Figure 1). The operating portion or working surface 7 is intended to cooperate with the products to be rolled, and therefore is the portion that is exposed in use to contaminants such as water and mill scale, which could move toward the oil-film bearing 8.

The sealing assembly 1 therefore has the dual function of providing a hydraulic seal for the oil, on the oil side 4, to prevent it from leaking outwards, specifically to the water side 6, and a hydraulic seal against any contaminants moving from the water side 6 to the oil side 4.

The sealing assembly 1 firstly comprises an innovative sealing ring 10, which is also part of the invention.

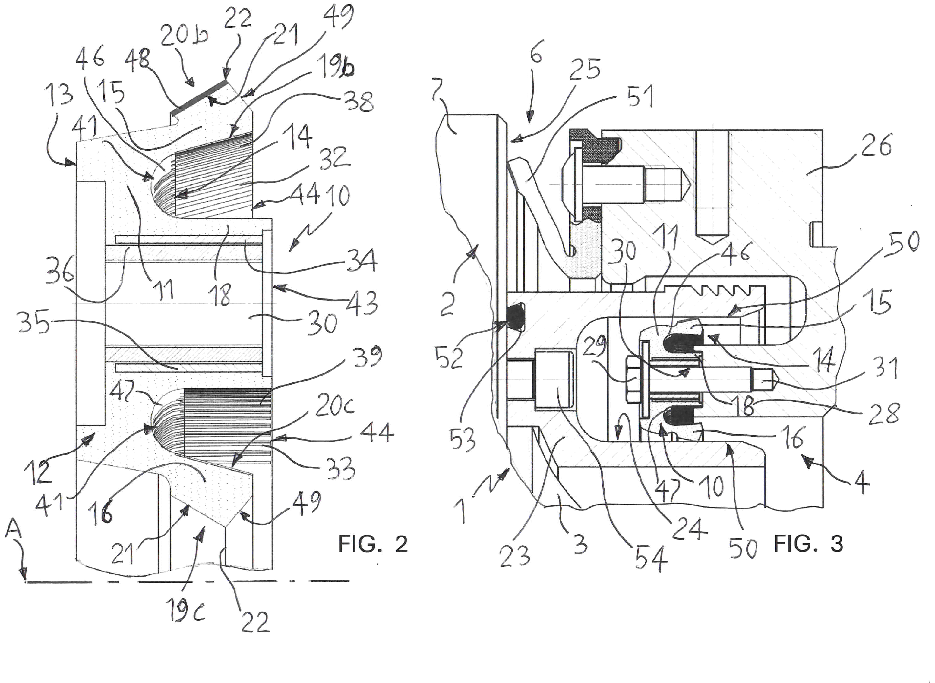

The sealing ring 10 comprises, according to one aspect of the invention, an annular body 11 or upper part of the sealing ring body (Figure 2) made wholly of a single elastomeric material of suitable properties, but generally relatively soft and flexible.

The annular body 11 (Figure 2) is shaped so as to have a radially central or intermediate annular portion 12, i.e. the lower part of the sealing ring body, delimited between a first face 13 or outer face 13 of the seal and a second face 14 or inner face of the outer lip, which are opposite each other, of the annular body 11 as a whole and oriented radially with respect to an axis of symmetry A of the sealing ring 10, which coincides substantially when in use, and in this case coincides in Figures 1-3 with the axis of rotation of the backup roll 2 and with an overall axis of symmetry of the sealing assembly 1.

The annular body 11 is shaped so as to have a first annular sealing lip 15, or radially outer sealing lip, and a second annular sealing lip 16, or radially inner sealing lip.

The annular sealing lips 15 and 16 are formed integrally with the central annular portion 12, from which the first lip 15 projects radially outwards and the second lip 16 projects radially inwards.

In addition, the annular sealing lips 15 and 16 both project from the body 11, axially cantilevered from the second face 14, which is configured to be oriented, when in use, toward the oil side 4, as illustrated in Figure 3, whereas the face 13 is oriented toward the water side 6 when in use.

According to one aspect of the invention, in combination with the presence of the lips 15 and 16, which extend radially and axially cantilevered from the intermediate portion 12 of the body 11, the second face 14 of the body 11 is provided with an annular rib 18 or central body of the seal, which projects axially cantilevered from the second face 14 and is arranged radially between the first and second lips 15 and 16.

Each lip 15 and 16 is also shaped so as to be delimited between a radially inner lateral wall 19, which can also be described as the radial inner surface of the lips 15, 16, and a radially outer lateral wall 20, which can also be described as the radially outer surface of the lips 15, 16, where, here and below, the terms "radially" and "radial" refer to the axis of symmetry A.

In particular, the radially outer lip 15 is delimited between a radially inner lateral wall or radial inner surface 19b and a radially outer lateral wall or radial outer surface 20b. On the other hand, the radially inner lip 16, which is mirror symmetrical with the lip 15, is delimited between a radially inner lateral wall 19c and a radially outer lateral wall 20c.

In addition, the radially inner wall 19c of the second lip 16 and the radially outer wall 20b of the first lip 15, which are mirror symmetrical with each other, as are the walls 19b and 20c, each includes a sealing surface 21 facing the first face 13 and delimited on the second face 14 by a sealing edge 22.

According to a further and important aspect of the invention, the sealing assembly 1 also comprises an annular element 23 which is substantially rigid and generally metal, which can also be described as a metal flange 23, for example made of steel, that has a U-shaped radial section oriented parallel to the axis A and that delimits a channel-shaped annular seat 24 or inside of the metal flange, which is configured, when in use and with the sealing assembly 1 mounted on the backup roll 2 (Figures 1 and 3), to slidingly engage the sealing ring 10 so that the latter and the annular element 23 are relatively rotatable.

The annular element 23 is also configured, when in use, to be rigidly attached to a front end face 25 of the operating portion or working surface 7 of the backup roll 2, facing the support portion 5 and, when in use, facing the oil side 4. The face 25 is the lateral face of the backup roll 2.

The sealing assembly 1 according to the invention also comprises a second annular element 26 or seal-bearing metal flange, which is substantially rigid, generally metal, for example made of steel, configured to be fastened stationary, when in use, in front of the front end face 25 of the operating portion 7 of the backup roll 2. In this case (Figure 1), the metal annular element 26 is fastened in a known manner, for example using screws, to a support 27 or support fitting for the oil-film bearing 8, known and illustrated only schematically and only in part using dashed lines.

According to one aspect of the invention, the annular element 26 is provided with a plurality of cantilevered perforated pegs 28, or threaded fastening holes, arranged in a ring and configured to project, when in use, toward the first annular element 23, partially inside the channel-shaped annular seat 24 (Figures 1 and 3).

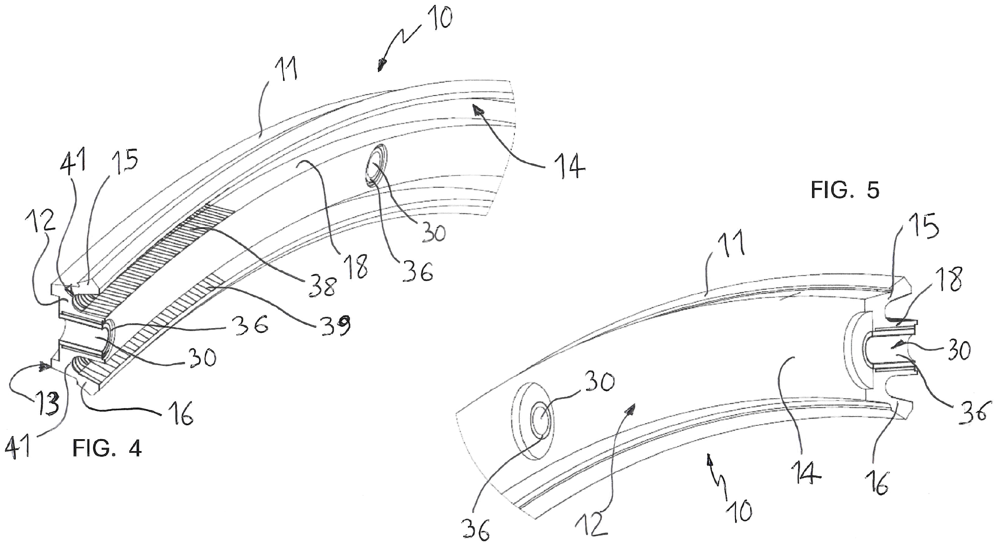

The sealing ring 10 is rigidly attached to the threaded holes of the pegs 28 via the second face 14 using removable connecting elements, in the example shown fastening screws 29, housed through the first axial through holes 30 (see also Figures 4 and 5) formed through the annular rib 18 and second threaded blind holes 31 formed in the pegs 28 (Figures 1, 2 and 3).

In addition, the annular rib 18 is configured to mate in contact axially against the pegs 28, with the pegs 28 which are arranged radially between the first and second lips 15 and 16, which extend partly within respective annular spaces 32 and 33, delimited respectively between the annular lip 15 and the annular rib 18, and between the annular rib 18 and the annular lip 16.

With reference to Figures 2 and 4 to 7, according to one aspect of the invention, the sealing ring 10 comprises, in addition to the annular body 11 made of elastomer, a pair of flat metal bands 34 and 35, i.e. in which the radial thickness is much smaller (for example, by almost an order of magnitude) than the axial width.

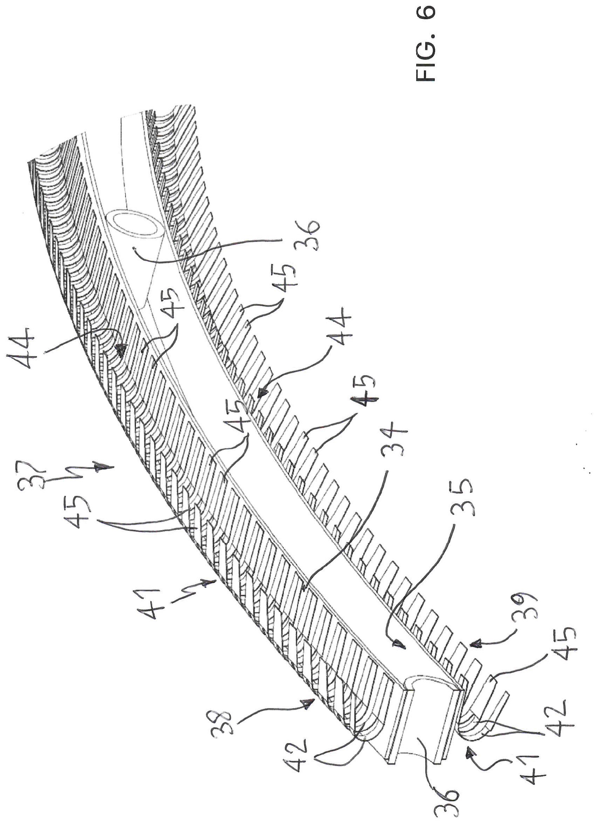

The metal bands 34, 35, or inner metal band ring 34 and outer metal band ring 35, are in fact folded in a ring shape around the axis of symmetry A (Figures 2 and 6), to form corresponding annular elements, and are coupled rigidly to the annular rib 18, specifically a first band 34 is coupled to the extrados side of the annular rib 18 facing toward the radially inner wall 19b of the first lip 15 and a second band 35 is coupled to the intrados side of the annular rib 18 facing toward the radially outer wall 20c of the second lip 16, substantially over almost the entire axial extension of the annular rib 18.

According to a further preferred aspect of the invention, the sealing ring 10 also comprises a plurality of metal bushings 36 which are shaped like cylindrical sleeves and housed rigidly inside the through holes of the annular rib 18, arranged radially between the first and second flat metal bands 34 and 35, folded in a ring shape, as shown in Figures 2 and 6.

The flat metal bands 34, 35 folded in a ring shape and the cylindrical bushings 36, one for each hole 30, are preferably made in contact with each other and are co-moulded with the radially central annular portion 12 of the annular body 11 made of elastomeric material, preferably at least partially embedded in the elastomeric material itself.

Alternatively, the metal bands 34, 35 are bonded during vulcanization to the elastomeric material, respectively radially on the outside of the extrados side and radially on the inside of the intrados side of the annular rib 18, while the bushings 36 are bonded inside the holes 30 and, in this case, are no longer in direct contact with the metal bands 34 and 35.

Co-moulding is preferred, as it is possible to pre-assemble an annular structure 37, as illustrated in Figure 6, formed by the bushings 36 and the two metal bands 34 and 35 formed in ring shapes within a mould for the annular body 11 and then to inject the elastomeric material into the mould to obtain the annular body 11 with its intermediate annular portion 12 and the lips 15 and 16, incorporating the entire metal annular structure 37 inside the intermediate annular portion 12.

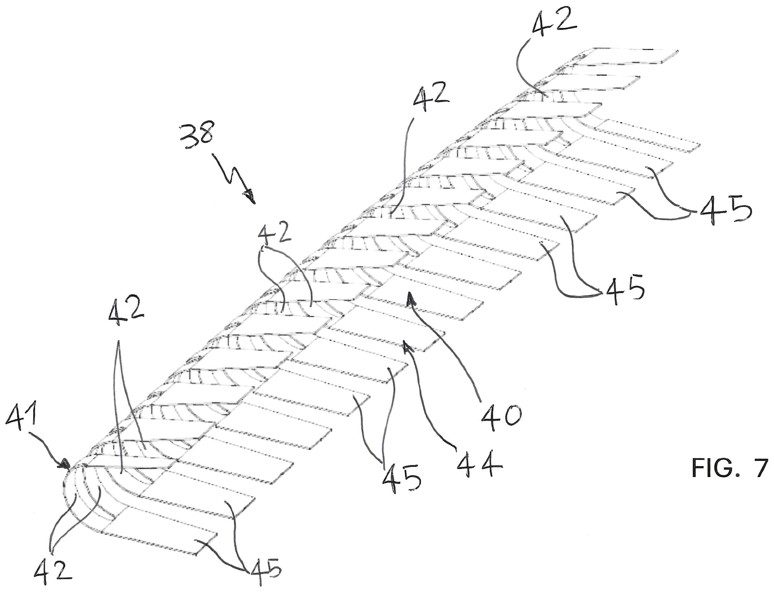

According to another preferred aspect of the invention, the sealing ring 10 also comprises a pair of annular finger springs 38, 39, specifically an outer finger spring 38 and an inner finger spring 39, each of which is obtained (see Figure 7, which schematically illustrates a portion of the spring 38) from a semi-blanked flat metal strip 40 that is then folded in a ring shape about the axis of symmetry A.

The springs 38 and 39 are inserted in a radially straddling arrangement, with the spring 38 (Figures 2 and 4) positioned between the first lip 15 and the extrados side of the annular rib 18 and the spring 39 positioned between the second lip 16 and the intrados side of the annular rib 18.

The finger springs 38 and 39 each have a corresponding first axial end 41, defined by a plurality of stretches 42 (Figure 7) of the metal strip 40 curved away from the second face 14 and toward one end 43 (Figure 2) of the annular rib 18.

In addition, the finger springs 38 and 39 each have a corresponding second axial end 44, opposite the first end 41, defined by a plurality of straight stretches 45 (Figure 7) of the metal strip 40, extending axially cantilevered from adjacent pairs of the curved stretches 42 of the metal strip 40 that are integrally formed with the straight stretches 45, so as to connect all adjacent pairs of curved stretches 42 with each other without interruption.

The finger springs 38 and 39 are preferably always an integral part of the seal 10, together with the annular body 11 and, even more preferably, are included in the seal 10 in combination with the flat metal bands 34, 35 and the bushings 36, with which they may be pre-coupled to form the annular structure 37 (Figure 6).

Preferably, the first curved axial ends 41 of the finger springs 38 and 39 are housed within respective annular grooves 46, 47, i.e. an outer annular groove 46 and an inner annular groove 47 (Figures 2 and 3), formed on the second face 14 when moulding the radially intermediate portion 12 of the elastomeric body 11.

A first groove 46 is formed between the first annular lip 15 and the extrados side of the annular rib 18 and a second groove 47 is formed between the second lip 16 and the intrados side of the annular rib 18.

According to a detailed aspect of the invention, the straight stretches 45 of the metal strip 40 forming each finger spring 38, 39 are arranged in adjacent pairs, the straight stretches 45 of each adjacent pair being arranged circumferentially alternating radially outwardly and radially inwardly and radially diverging from each other (Figures 6 and 7), so that the straight stretches 45 of the first spring 38 couple alternately in contact with the first lip 15 and the axial rib 18 and the straight stretches 45 of the second spring 39 couple alternately in contact with the second lip 16 and the axial rib 18.

From the above description, it is clear that the invention relates not only to the sealing assembly 1 *tout court,* but also to the seal 10 as a whole, which is a highly innovative seal.

The sealing ring 10 is configured to be used in a backup roll 2, at (i.e. radially facing a), but not in contact with, the roll neck 3, and comprises, as already illustrated, an annular body 11 made wholly of an elastomeric material and comprising in turn:
- a radially central or intermediate annular portion 12 delimited between a first and a second face 13, 14, opposite each other, of the annular body 11 and oriented substantially perpendicular to the axis of symmetry A of the sealing ring 10, which coincides with the axis of symmetry of the sealing assembly 1;
- an axial annular rib 18 extending axially in cantilever from the annular portion 12 on the face 14; and
- a first and a second annular lip 15, 16 integrally formed with the central annular portion 12, from which the first lip 15 projects radially outwards and the second lip 16 projects radially inwards, both lips 15, 16 being axially cantilevered from the second face 14 and the end 43 of the axial annular rib 18, which is radially interposed between the lips 15 and 16.

The face 14 is configured to be oriented in use toward an oil side 4 (Figure 3) of the backup roll 2, and each lip 15, 16 is delimited between a radially inner lateral wall 19b, 19c and a radially outer lateral wall 20b, 20c.

According to a further aspect of the invention, the radially inner wall 19c of the second lip 16 and the radially outer wall 20b of the first lip 15 each includes a sealing surface 21 facing the first face 13 and delimited on the second face 14 by the sealing edge 22.

The sealing ring 10 also comprises, in combination with the annular body 10 described above, the pair of flat metal bands 34, 35 folded in a ring shape, preferably co-moulded with the radially central annular portion 12 of the body 11 made of elastomeric material, preferably at least partially embedded in the elastomeric material, and the pair of finger springs 38, 39, which are housed respectively in the annular space 32 and the annular space 33 delimited by opposing bands between the lips 15, 16 and the annular rib 18.

In particular, the finger springs 38, 39, are preferably each obtained from a flat semi-blanked metal strip 40 folded in a ring shape around the axis of symmetry A, inserted in a radially straddling arrangement, with a first spring 38 positioned between the first lip 15 and the extrados side of the annular rib 18 and the second spring 39 positioned between the second lip 16 and the intrados side of the annular rib 18.

The sealing surfaces 21 of the first lip 15 and the second lip 16 are defined by flat surfaces. In addition, the sealing surface 21 of the radially outer lip 15 is preferably coated with a layer or plate 48 of anti-friction material, preferably PTFE.

In addition, the sealing surfaces 21 of the lips 15, 16 are each formed adjacent to a second flat surface 49 or front surface of the lip (Figure 2) oriented from the face of the second face 14 and arranged at an angle to the sealing surface 21 of the same lip 15, 16, so as to form the sealing edge 22 on each lip 15, 16, so that the radially outer wall 20b of the first lip 15 and the radially inner wall 19c of the second lip 16 have an annular cusp shape (in radial cross-section).

Preferably, the sealing assembly 1 (Figure 3) also comprises an annular sealing lip 51 or front seal, rigidly carried by the metal element 26 and configured to exert a hydraulic sliding seal on the front face 25 of the operating portion 7 of the backup roll 2, in order to isolate the water side 6 from the oil side 4.

In addition, the metal annular element 23 is provided, facing toward the front face 25, with a static sealing ring 52 housed in an annular seat 53 and held in position between the face 25 and the metal element 23 by the metal element 23 itself, which is rigidly attached to the front face 25, for example using screws 54 (flange fastening screws on the roll neck 3 of the backup roll 2).

The described sealing assembly 1 has the advantage of ensuring a good response of the sealing lips 15, 16 to vibrations, because even in the presence of installation offset or wear or runout, the lips 15, 16 always maintain sufficient specific pressure on the respective sliding surfaces 50 (sliding surfaces formed on the inside of the metal flange 24 for the lips 15, 16) defined by the opposing radially outer and radially inner lateral walls of the annular seat 24 during operation of the backup roll 2, even at high rotational frequency.

Several advantages are obtained with the described sealing solution:
- Easy assembly and disassembly procedure
- Better sealing conditions in all working conditions
- Longer service life
- Fewer parts to be replaced to convert a standard solution from the prior art into an innovative solution according to the present invention.

All the objectives of the invention are therefore achieved.

## Claims

1. Sealing assembly (1) for a backup roll (2) configured to make in use a hydraulic seal at a roll neck (3) of the backup roll in a rolling mill, particularly a rolling mill for flat products, between an oil side (4), facing in use toward a support portion (5) of the backup roll, and a water side (6) facing in use toward an operating portion (7) of the backup roll, **characterized in that** it comprises, in combination:
(a) a sealing ring (10) comprising a body (11) made wholly of an elastomeric material so as to form a radially central annular portion (12) delimited between a first and a second face (13, 14), opposite to each other, of said body and oriented radially with respect to an axis of symmetry (A) of the sealing ring and a first and a second annular lip (15, 16) made integral in one piece with the central annular portion (12), from which the first lip (15) projects radially outward and the second lip (16) projects radially inward and both axially cantilevered from the second face (14) which is configured to be oriented in use toward the oil side (4), the second face (14) being provided with an annular rib (18) that projects axially cantilevered from the second face and radially between the first and second lips (15, 16), each of which is delimited between a radially inner lateral wall (19b, 19c) and a radially outer lateral wall (20b, 20c), the radially inner lateral wall (19c) of the second lip (16) and the radially outer lateral wall (20b) of the first lip (15) each including a sealing surface (21) facing the first face (13) and delimited on the second face (14) by a sealing edge (22); and
(b) a substantially rigid annular element (23) delimiting a channel-shaped annular seat (24), which is configured to engage said sealing ring (10) in a sliding manner, so as to render the latter and said annular element (23) relatively rotatable, the annular element (23) being configured to be in use rigidly attached to an end face (25) of the operating portion (7) of the backup roll (2) facing the support portion (5).

2. Sealing assembly (1) according to claim 1, **characterized in that** it further comprises a second annular element (26), substantially rigid, configured to be stationarily fixed in use facing said end face (25) of said operating portion (7) of said backup roller, said second annular element (26) being provided with a plurality of cantilevered pegs (28) arranged in a ring configured to project in use toward said first annular element (23), partially within said channel-shaped annular seat (24), said sealing ring (10) being rigidly attached to said pegs (28), via said second face (14), by means of removable connecting elements (29) housed through first axial through holes (30) drilled through said annular rib (18) and second holes (31) drilled within said pegs (28), said annular rib (18) being configured to mate in contact against said pegs (28), with the pegs arranged radially between the first and second lips (15, 16).

3. Sealing assembly (1) according to claim 2, **characterized in that** said sealing ring (10) further comprises a pair of flat metal bands (34, 35) folded in a ring shape around said axis of symmetry (A) and respectively coupled integrally, a first band (34) on the extrados side of said annular rib (18) facing the radially inner wall (19b) of said first lip (15) and a second band (35) on the intrados side of said annular rib (18) facing the radially outer wall (20c) of said second lip (16), to said annular rib (18), substantially along an entire axial extension thereof; and a plurality of cylindrical metal bushings (36) housed integral within said through holes (30) of the annular rib (18), arranged radially between the first and second flat metal bands (34, 35) folded in a ring shape.

4. Sealing assembly (1) according to claim 3, **characterized in that** said flat metal bands (34, 35) folded in a ring shape and said cylindrical bushings (36) have been co-moulded with said radially central annular portion (12) of the body (11) made of elastomeric material, preferably at least partially embedded in the elastomeric material, or have been bonded during vulcanization to the elastomeric material, respectively, radially on the outside of the extrados side and radially on the inside of the intrados side of the annular rib (18), and said bushings (36) within said axial through holes (30).

5. Sealing assembly (1) according to any of the preceding claims, **characterized in that** said sealing ring (10) further comprises a pair of finger springs (38, 39), each obtained from a flat metallic strip (40) semi-blanked and folded in a ring shape around said axis of symmetry (A), inserted radially straddling a first spring (38) between the first lip (15) and radially on the outside of the extrados side of said annular rib (18) and a second spring (39) between the second lip (16) and radially on the inside of the intrados side of said annular rib (18).

6. Sealing assembly (1) according to claim 5, **characterized in that** said finger springs (38, 39) each have a first axial end (41) defined by a plurality of stretches (42) of the metallic strip (40) curved so as to extend away from said second face (14) and a second axial end (44) opposite said first end (41), defined by a plurality of straight stretches (45) of the metallic strip (40) extending axially cantilevered from adjacent pairs of said curved stretches (42) of the metallic strip with which the straight stretches (45) are obtained integral in one piece, so as to connect all said adjacent pairs of curved stretches (42) to each other without interruption.

7. Sealing assembly (1) according to claim 6, **characterized in that** said curved first axial ends (41) of the finger springs (38, 39) are housed within respective annular grooves (46, 47) formed on said second face (14), a first groove (46) between the first annular lip (15) and the extrados side of said annular ribs (18) and a second groove (47) between the second lip (16) and the intrados side of said annular rib (18); and **in that** said straight stretches (45) of the metallic strip (40) which forms each finger spring are arranged in adjacent pairs, the straight stretches (45) of each adjacent pair being arranged circumferentially alternating radially outwardly and radially inwardly and radially diverging from each other, so that the straight stretches (45) of the first spring (38) couple alternately in contact with the first lip (15) and the axial rib (18) and the straight stretches (45) of the second spring (39) couple alternately in contact with the second lip (16) and the axial rib (18).

8. A sealing ring (10) for a backup roll (2), **characterized in that** it comprises an annular body (11) wholly made of an elastomeric material and comprising in turn a radially central annular portion (12) delimited between a first and a second face (13, 14), opposite to each other, of the annular body (11) and oriented substantially perpendicular to an axis of symmetry (A) of the sealing ring, and a first and second annular lip (15, 16) made integral in one piece with the central annular portion (12), from which the first lip (15) projects radially outward and the second lip (16) radially inward and both axially cantilevered from the second face (14) which is configured to be oriented, in use, toward an oil side (4) of the backup roll (2), the second face (14) being provided with an annular rib (18) that projects axially cantilevered from the second face and radially between the first and second lips (15, 16), each of which is delimited between a radially inward lateral wall (19b, 19c) and a radially outer lateral wall (20b, 20c), the radially inner lateral wall of the second lip and the radially outer lateral wall of the first lip each including a sealing surface (21) facing the first face (13) and delimited on the second face by a sealing edge (22).

9. Sealing ring for a backup roll according to claim 8, **characterized by** further comprising:
- a pair of flat metal bands (34, 35) folded in a ring shape about said axis of symmetry and coupled integrally, respectively, a first band (34) to an extrados side of said annular rib (18) facing the radially inner wall of the first lip and a second band (35) to an intrados side of said annular rib (18) facing the radially outer wall of the second lip, substantially along an entire axial extension of said annular rib; said flat metal bands (34, 35) folded in a ring shape having been co-moulded with said elastomeric material radially central annular portion (12) of the body, preferably at least partially embedded in the elastomeric material, or having been bonded during vulcanization to the elastomeric material on, respectively, said extrados side and said intrados side of the annular rib (18); and
- a pair of finger springs (38, 39), each obtained from a flat metallic strip (40) semi-blanked and folded in a ring shape around said axis of symmetry, inserted radially straddling a first spring (38) between the first lip (15) and the extrados side of said annular rib (18) and a second spring (39) between the second lip (16) and the intrados side of said annular rib (18).

10. Sealing ring for a backup roll according to claim 8 or 9, **characterized in that** the sealing surface (21) of the first and second lips (15, 16) is a flat surface and is formed adjacent to a second flat surface (49) oriented from the second face (14) and arranged at an angle to the sealing surface (21) so as to form said sealing edge (22), so that the radially outer wall (20b) of the first lip (15) and the radially inner wall (19c) of the second lip (16) have a shape of an annular cusp; the sealing surface (21) of the first lip (15) being coated with a layer (48) of anti-friction material, preferably PTFE.
